**Europäisches Patentamt**

**European Patent Office**

**Office européen des brevets**

(19)

(11) Numéro de publication : **0 340 074 B1**

# FASCICULE DE BREVET EUROPEEN

(12)

(45) Date de publication du fascicule du brevet :
07.10.92 Bulletin 92/41

(51) Int. Cl.⁵ : **B60P 1/02**

(21) Numéro de dépôt : **89401065.1**

(22) Date de dépôt : **18.04.89**

(54) Installation de plateaux de véhicules de transport.

(30) Priorité : **27.04.88 FR 8805616**

(43) Date de publication de la demande :
**02.11.89 Bulletin 89/44**

(45) Mention de la délivrance du brevet :
**07.10.92 Bulletin 92/41**

(84) Etats contractants désignés :
**BE DE ES GB IT NL SE**

(56) Documents cités :
**CH-A- 568 910**
**GB-A- 2 139 982**
**US-A- 2 678 139**

(73) Titulaire : **Malemant, Bertrand Michel**
**6, Villa Mathelin**
**F-95210 St. Gratien (FR)**

(72) Inventeur : **Malemant, Bertrand Michel**
**6, Villa Mathelin**
**F-95210 St. Gratien (FR)**

(74) Mandataire : **Faber, Jean-Paul**
**CABINET FABER 35, rue de Berne**
**F-75008 Paris (FR)**

Jouve, 18, rue Saint-Denis, 75001 PARIS

EP 0 340 074 B1

# Description

La présente invention concerne l'aménagement des véhicules de transport tels que les camions.

L'invention vise plus particulièrement des véhicules qui sont destinés à être chargés avec des caisses portées par des chariots roulés depuis un quai de chargement à l'intérieur des véhicules.

Généralement on prépare sur un quai le chargement d'un véhicule en posant sur un ou plusieurs chariots ledit chargement, chariots qui sont roulés dans le véhicule puis qui sont ensuite ramenés sur le quai pour un autre chargement. Une des difficultés de tels systèmes est de dégager les chariots du chargement lorsqu'ils sont placés dans le véhicule. On a proposé de prévoir dans le véhicule des rails à section en C dont l'ouverture est tournée vers le haut et dans lesquels sont logés des chemins de roulement mobiles verticalement dans les rails. Lorsqu'on charge le véhicule, les chemins de roulement sont dans une position haute et servent de guidage pour les roulettes des chariots. Lorsque le chargement est en place, on baisse les chemins de roulement, la charge reposant sur les rails, et on peut ainsi dégager les chariots. Une telle disposition est notamment décrite dans CH-A-568 910.

Un des inconvénients de ce système est que souvent lors du déchargement du véhicule on utilise des chariots élévateurs dont les fourches de levage se coincent dans les rails.

L'un des buts de la présente invention est de remédier à ces divers inconvénients.

L'installation, selon l'invention est du type comprenant des rails de guidage longitudinaux pour des chariots supportant des charges à insérer dans un véhicule et des moyens pour dégager les chariots lorsque les charges sont mises en place dans le véhicule et est caractérisée en ce qu'elle comprend entre deux rails de guidage correspondant aux deux chariots supportant une charge, un plancher porté par des supports mobiles verticalement, des moyens étant prévus pour commander le soulèvement du plancher de manière que celui-ci puisse occuper une position basse de chargement et une position haute afin de soulever la charge pour dégager les chariots.

Grâce à cette disposition, on peut aménager un plateau de véhicule afin que sa surface ne présente aucun organe s'opposant à un déchargement avec des chariots élévateurs.

Suivant une caractéristique constructive, le plateau comporte des profilés à section en C s'étendant parallèlement aux rails et présentant une âme solidaire dudit plateau, deux ailes et deux retours, dans ces profilés étant logés des supports à section sensiblement rectangulaire avec deux grands côtés dont la longueur correspond sensiblement à l'intervalle séparant les retours, et dont les petits côtés sont prolongés par des ailes tournées vers l'extérieur et destinées, d'une part, à coopérer avec l'âme du profilé lorsque le plancher est en position basse et, d'autre part, à constituer des butées lorsque le plancher est en position haute, un boudin gonflable étant inséré entre l'âme des profilés et les supports correspondants et le plancher étant fixé sur lesdits supports.

Suivant encore un détail constructif, l'installation comprend deux rails montés dans la partie médiane du plateau du véhicule et deux rails prévus le long des bords longitudinaux dudit plateau et deux planchers mobiles disposés de part et d'autre des deux rails de la partie médiane.

Enfin suivant une dernière caractéristique, les deux rails de la partie médiane du plateau du véhicule sont en creux et réalisés dans des profilés présentant des parties en saillie situées au niveau des planchers lorsque ceux-ci sont en position basse.

L'invention va maintenant être décrite avec plus de détails en se référant à un mode de réalisation particulier donné à titre d'exemple seulement et représenté aux dessins annexés, dans lesquels :

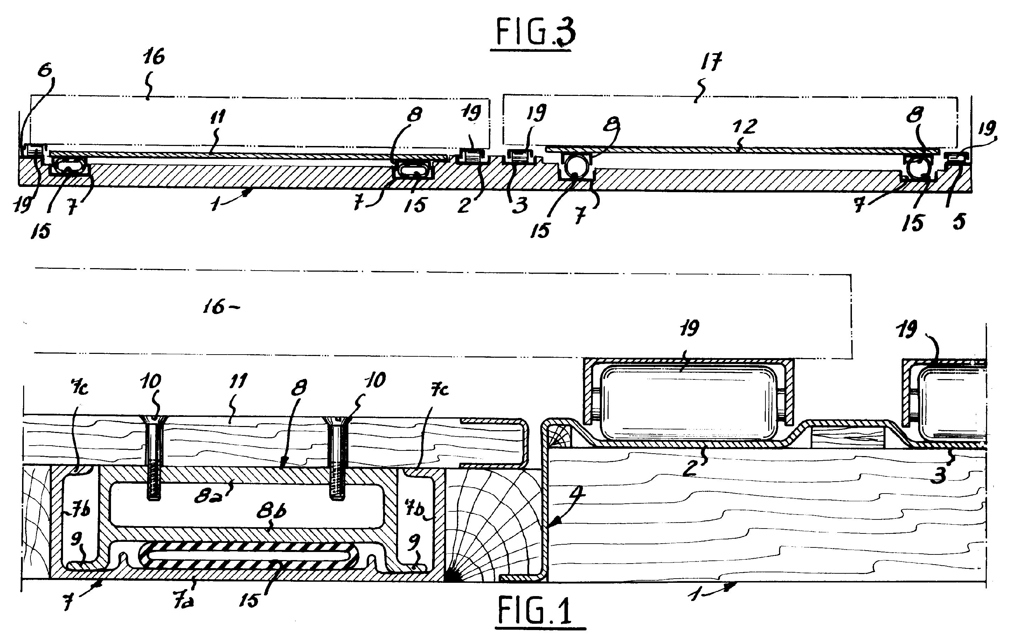

Figure 1 est une vue en coupe partielle par un plan vertical perpendiculaire à l'axe longitudinal de plancher d'un camion.

Figure 2 est une vue en coupe partielle correspondant à la figure 1 une partie étant en position haute.

Figure 3 et figure 4 sont des vues en coupe à plus petite échelle montrant le fonctionnement de l'installation.

La référence 1 désigne la plate-forme d'un véhicule de transport tel qu'un camion. Dans sa partie médiane longitudinale la plate-forme 1 comporte des rails de guidage 2 et 3 qui sont réalisés à partir d'un profilé métallique 4 convenablement plié.

Le long des bords longitudinaux de la plate-forme 1, il est également prévu des rails de guidage 5 et 6 réalisés à partir de profilés.

Dans la partie de la plate-forme 1 située entre le rail 2 et le rail 6 sont logés deux profilés 7 à section en C comprenant une âme 7a, deux ailes 7b et deux retours 7c. Les profilés 7 sont disposés parallèlement entre eux et parallèlement aux rails 2, 3, 5 et 6.

Dans chaque profilé 7 est logé un support mobile 8 constitué par un profilé de section sensiblement rectangulaire dont les grands côtés 8a et 8b ont une longueur correspondant à l'intervalle situé entre les extrémités libres des retours 7c, tandis que les petits côtés sont prolongés par des ailes 9 tournées vers l'extérieur et destinées, d'une part, à reposer sur l'âme 7a et, d'autre part, à constituer des butées en coopérant avec les retours 7c.

La hauteur de chaque profilé 8 est telle que lorsque les ailes 9 portent contre l'âme 7a la surface externe des retours 7c et la surface externe du grand côté 8a sont situées dans un même plan.

Sur chaque profilé 8 est fixé par des vis 10 un plancher 11.

Comme on le voit sur les figures, les rails 2 et 3 sont en creux et le plancher 11 est situé au même niveau que les rails 6 et les parties en relief bordant les rails 2 et 3.

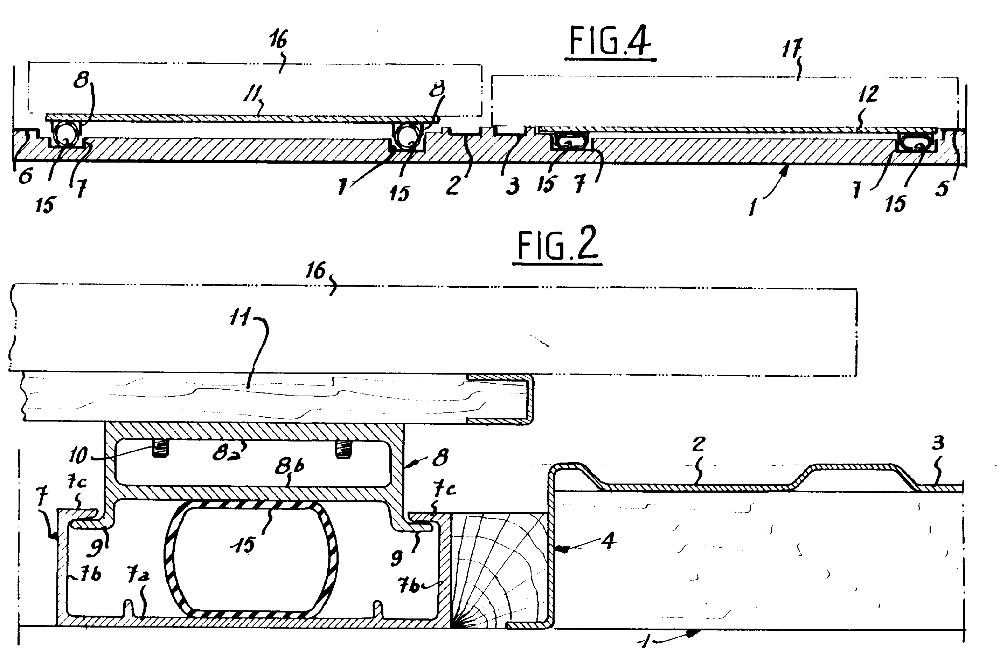

Entre les rails 3 et 5, il est prévu exactement la même disposition qu'entre les rails 2 et 6 et on a reporté aux figures 2 et 3 les références correspondantes, toutefois pour faciliter la compréhension du fonctionnement, le plancher supporté par les profilés 8 de la disposition prévue entre les rails 3 et 5 est référencé 12.

Entre les grands côtés 8b et les âmes 7a sont insérés des boudins gonflables 15 qui peuvent être reliés soit à un compresseur prévu directement sur le véhicule, soit à une source d'air comprimé extérieur, par exemple une source d'air comprimé prévue sur un quai de chargement.

En traits mixtes sur les figures on a représenté les charges à transporter 16 et 17 qui sont posées sur des chariots 19, un quai de chargement comportant, lui-même, des rails de guidage qui sont alignés avec les rails 2, 3, 5 et 6 lors du chargement.

Pour procéder au chargement du véhicule, on procède de la façon suivante :

Sur un quai de chargement on prépare les charges à transporter qui sont posées sur des chariots 19, le véhicule à charger étant placé devant le quai et les rails 2, 3, 5 et 6 alignés avec les rails du quai. Les planchers 11 et 12 sont maintenus en position basse et les chariots 19 roulés afin que les charges 16 et 17 viennent se loger dans le véhicule.

L'un des planchers, par exemple, le plancher 12 est ensuite soulevé, de l'air comprimé étant envoyé dans les boudins 15 correspondants de manière que la charge 17 soit dégagée des chariots 19 qui peuvent ainsi être retirés (fig. 3). On commande ensuite le dégonflage des boudins 15 afin que le plancher 12 revienne dans sa position initiale et que la charge 17 soit ainsi supportée par le plateau du véhicule.

On procède ensuite de la même façon pour la charge 16 en soulevant le plancher 11 lorsque la charge est mise en place dans le véhicule pour dégager les chariots 19, puis en abaissant ledit plancher 11.

On conçoit qu'une telle installation très simple facilite le chargement de véhicules et que pour le déchargement de ceux-ci on peut parfaitement utiliser des chariots élévateurs sans risquer d'endommager ladite installation.

## Revendications

1°- Installation de plateaux de véhicules de transport du type comprenant des rails de guidage longitudinaux pour des chariots supportant des charges à insérer dans un véhicule et des moyens pour dégager les chariots lorsque les charges sont mises en place dans le véhicule caractérisée en ce qu'elle comprend entre deux rails de guidage (2-6) correspondant aux deux chariots supportant une charge, un plancher (11,12) porté par des supports (8) mobiles verticalement, des moyens (15) étant prévus pour commander le soulèvement du plancher (11) de manière que celui-ci puisse occuper une position basse de chargement et une position haute afin de soulever la charge (16-17) pour dégager les chariots (19).

2°- Installation de plateaux de véhicules de transport selon la revendication 1, caractérisée en ce que le plateau (1) comporte des profilés (7) à section en C s'étendant parallèlement aux rails (2-6) et présentant une âme (7a) solidaire dudit plateau, deux ailes (7b) et deux retours (7c), dans ces profilés étant logés des supports (8) à section sensiblement rectangulaire avec deux grands côtés (8a, 8b) dont la longueur correspond sensiblement à l'intervalle séparant les retours (7c), et dont les petits côtés sont prolongés par des ailes (9) tournées vers l'extérieur et destinées, d'une part, à coopérer avec l'âme du profilé (7) lorsque le plancher est en position basse et, d'autre part, à constituer des butées lorsque le plancher est en position haute, un boudin gonflable (15) étant inséré entre l'âme (7a) des profilés (7) et les supports (8) correspondants et le plancher (11) étant fixé sur lesdits supports (8).

3°- Installation de plateaux de véhicules de transport, selon la revendication 1, caractérisée en ce qu'elle comprend deux rails (2 et 3) montés dans la partie médiane du plateau du véhicule et deux rails (5 et 6) prévus le long des bords longitudinaux dudit plateau (1) et deux planchers mobiles (11, 12) disposés de part et d'autre des deux rails (2, 3) de la partie médiane.

4°- Installation de plateaux de véhicules de transport, selon la revendication 3, caractérisée en ce que les deux rails (2,3) de la partie médiane du plateau (1) du véhicule sont en creux et réalisés dans des profilés (4) présentant des parties en saillie situées au niveau des planchers (11, 12) lorsque ceux-ci sont en position basse.

## Patentansprüche

1. Einrichtung für Ladeflächen von Transportfahrzeugen, die längsverlaufende Führungsschienen für Laufkarren aufweist, die Ladegüter tragen, die in ein Fahrzeug einzuladen sind, und mit Mitteln zur Freigabe der Laufkarren, wenn die Ladegüter in dem Fahrzeug an ihrem Platz sind, dadurch gekennzeichnet, daß sie zwischen zwei Führungsschienen (2-6), die zwei ein Ladegut tragenden Laufkarren angepaßt sind, eine Platte (11, 12) aufweist, die durch vertikal bewegliche Träger (8) getragen ist, und daß Mittel (15) vorgesehen sind, um das Anheben der Platte (11) in der Weise zu steuern, daß diese eine abgesenkte Beladestellung und eine angehobene Stellung einnehmen kann, um das Ladegut (16-17) für das Freigeben der Laufkarren (19) anzuheben.

2. Einrichtung für Ladeflächen von Transportfahrzeugen gemäß Anspruch 1, dadurch gekennzeichnet, daß die Ladefläche (1) Profile (7) mit C-förmigem Querschnitt aufweist, die sich parallel zu den Führungsschienen (2-6) erstrecken und einen mit der genannten Ladefläche verbundenen Steg (7a), zwei Schenkel (7b) und zwei vorspringende Teile (7c) aufweist, daß in diesen Profilen Träger (8) mit einem im wesentlichen rechteckigen Querschnitt aufgenommen sinc, deren beide großflächigen Seiten (8a, 8b) eine Länge besitzen, die im wesentlichen dem Abstand zwischen den vorspringenden Profilteilen (7c) entspricht, und deren Schmalseiten durch Flügel (9) verlängert sind, die nach auswärts gerichtet und dazu bestimmt sind, um einerseits mit dem Steg des Profils zusammenzuwirken, wenn die Platte in der abgesenkten Stellung ist, und um andererseits Anschläge zu bilden, wenn die Platte in der angehobenen Stellung ist, daß ein aufblasbarer Wulst (15) zwischen den Steg (7a) der Profile (7) und die entsprechenden Träger (8) eingelegt ist und daß die Platte (11) auf den genannten Trägern (8) befestigt ist.

3. Einrichtung für Ladeflächen von Transportfahrzeugen gemäß Anspruch 1, dadurch gekennzeichnet, daß sie zwei Führungsschienen (2 und 3), die im mittleren Teil der Ladefläche des Fahrzeuges angeordnet sind, und zwei Führungsschienen (5 und 6), die entlang der längsverlaufenden Ränder der genannten Ladefläche (1) vorgesehen sind, sowie zwei bewegliche Platten (11, 12) aufweist, von denen je eine auf der einen und der anderen Seite der zwei Führungsschienen (2, 3) des mittleren Teils angeordnet ist.

4. Einrichtung für Ladeflächen von Transportfahrzeugen gemäß Anspruch 3, dadurch gekennzeichnet, daß die zwei Führungsschienen (2, 3) des mittleren Teils der Ladefläche (1) des Fahrzeugs als Vertiefungen in Profilstücken (4) ausgebildet sind, die vorstehende Teile aufweisen, die das Niveau der Platten (11, 12) in ihrer abgesenkten Stellung einnehmen.

## Claims

1. A platform installation for transport vehicles of the type comprising longitudinal guide rails for trolleys supporting loads to be inserted in a vehicle and means for releasing the trolleys when the loads are positioned in the vehicle,

characterised in that, between two guide rails (2-6) corresponding to the two trolleys supporting a load, it comprises a floor (11, 12) borne by supports (8) which can move vertically, with means (15) being provided to control the raising of the floor (11) so that it can occupy a low loading position and a high loading position so as to raise the load (16-17) to release the trolleys (19).

2. A platform installation for transport vehicles according to Claim 1,

characterised in that platform (1) comprises C shaped sections (7) which extend parallel to the rails (2-6) and have a web (7a) integral with said platform, two wings (7b) and two flanges (7c), with supports (8) having a substantially rectangular section being housed in these sections, with two long sides (8a, 8b), the length of which corresponds roughly to the space separating the flanges (7c), and the short sides of which are extended by wings (9) turned towards the outside and intended, firstly, to cooperate with the web of the section (7) when the floor is in the low position and, secondly, to form stops when the floor is in the high position, with an inflatable (15) being inserted between the web (7a) of the sections (7) and the corresponding supports (8) and the floor (11) being fixed on said supports (8).

3. A platform installation for transport vehicles according to claim 1,

characterised in that it comprises two rails (2 and 3) mounted in the middle part of the vehicle platform and two rails (5 and 6) provided along the longitudinal edges of said platform (1) and two mobile floors (11, 12) disposed on both sides of the two rails (2, 3) of the middle part.

4. A platform installation for transport vehicles according to Claim 3.

characterised in that the two rails (2, 3) of the middle part of the platform (1) of the vehicle are inset and are made in sections (4) having projecting parts situated at the level of the floors (11, 12) when they are in the low position.

FIG.3

FIG.1

FIG.4

FIG.2